# EUROPEAN PATENT APPLICATION

(11) **EP 2 532 469 A1**
(43) Date of publication of application: **12.12.2012**
(21) Application number: 11739704.2
(22) Date of filing: 31.01.2011
(51) Int. Cl.: B23K 26/32, B23K 26/00, B23K 26/36, C03C 15/00, C03C 23/00

(54) **SUBSTRATE HAVING SURFACE MICROSTRUCTURE**

(30) Priority: 05.02.2010 JP 2010024776
(71) Applicant: FUJIKURA LTD., Kohtoh-ku Tokyo 135-8512 (JP); Bio Electro-mechanical Autonomous Nano Systems Laboratory Technology Research Association, Tokyo 101-0026 (JP); The University of Tokyo, Bunkyo-Ku Tokyo 113-8654 (JP)
(72) Inventor: NUKAGA, Osamu, Sakura-shi Chiba 285-8550 (JP); YAMAMOTO, Satoshi, Sakura-shi Chiba 285-8550 (JP); SAMUKAWA, Seiji, Tokyo 101-0026 (JP); SUGIYAMA, Masakazu, Tokyo 113-8654 (JP)
(74) Representative: Cabinet Plasseraud
(86) International application number: PCT/JP2011/051900
(87) International publication number: WO 2011/096356

(57) **Abstract**

A surface nanostructure forming method includes: preparing a substrate having an appropriate processing value; a first process of irradiating a part which is close to a surface of the substrate with laser light having a pulse duration of picosecond order or shorter at an irradiation intensity which is close to the appropriate processing value of the substrate, or greater than or equal to the appropriate processing value and less than or equal to an ablation threshold and forming periodic nanostructures in which first modified portions and second modified portions are periodically arranged in a self-assembled manner at a focus at which the laser light is concentrated and in a region which is close to the focus; and a second process of performing an etching treatment on the surface of the substrate having the periodic nanostructures formed thereon to form an uneven structure having the first modified portions as valleys.

## Description

### TECHNICAL FIELD

The present invention relates to a surface nanostructure forming method using a laser irradiation and etching, and a base having a surface nanostructure.
Priority is claimed on Japanese Patent Application No. 2010-024776, filed February 5, 2010, the content of which is incorporated herein by reference.

### BACKGROUND ART

It is known that when concentrating and applying a laser pulse having a pulse duration of picosecond order or shorter to the inside of a processing material, a modified portion and several nano-order periodic nanostructures perpendicular to the laser polarization are formed on the light-concentrated portion due to the incident light and the plasmon generated due to the laser pulse.
It is also known that by concentrating and applying a circularly polarized wave to the inside of a material, a unique structure eddying in a rotation direction of the polarized wave is obtained.
Processing methods using these phenomena are actively examined (for example, see the following Patent Document 1).

A method which is used to form the periodic nanostructures inside of a material and to increase the size of unevenness to thereby manufacture periodic nanostructures having a high aspect ratio is proposed.
For example, ultrashort pulsed laser light having a pulse duration of picosecond order or shorter is concentrated and applied to the inside of a material with power that is greater than a processing threshold for forming a plurality of periodic nanostructures.
Thereafter, polishing is performed to expose a laser-modified portion 2, and by wet etching using a hydrofluoric acid, the periodic nanostructures are selectively etched and a periodic uneven structure is formed (for example, see the following Non-Patent Document 1).
When a device is manufactured using the periodic nanostructures manufactured by etching, it is desirable that the aspect ratio of the periodic nanostructures can be controlled in accordance with the manufacturing method in order to deal with various devices.

However, the method disclosed in the above-mentioned Non-Patent Document 1 has the following problems.
(1) An uneven structure having an extremely high aspect ratio is not easily formed.
(2) Since a polishing process is required to expose a periodic nanostructures after irradiating the inside of a material with laser light, the number of processes increases.
(3) The periodic nanostructures having a relatively high aspect ratio is easily formed. However, since the etching treatment is carried out with a hydrofluoric acid having a concentration of 1% or less, the processing form is not easily controlled by changing the concentration of the hydrofluoric acid.

### PRIOR ART DOCUMENTS

### PATENT DOCUMENTS

[Patent Document 1] Japanese Unexamined Patent Application, First Publication No. 2008-49380

### NON-PATENT DOCUMENTS

[Non-Patent Document 1] OPTICS LETTERS/July 15, 2005/vol. 30, NO.14/1867-

### DISCLOSURE OF INVENTION

### PROBLEMS TO BE SOLVED BY INVENTION

The invention was devised in view of such conventional circumstances, and a first object of the invention is to form periodic nanostructures having a high aspect ratio using a simpler method than hitherto.
In addition, a second object of the invention is to provide a surface nanostructure forming method in which a processing form can be controlled and periodic nanostructures having a high aspect ratio can be formed.
Furthermore, a third object of the invention is to provide a base having a surface nanostructure formed of periodic nanostructures having a high aspect ratio.

### MEANS FOR SOLVING THE PROBLEMS

A surface nanostructure forming method according to an aspect of the invention includes: preparing a substrate having an appropriate processing value; a first process of irradiating a part which is close to a surface of the substrate with laser light having a pulse duration of picosecond order or shorter at an irradiation intensity, and forming periodic nanostructures in which first modified portions and second modified portions are periodically arranged in a self-assembled manner at a focus at which the laser light is concentrated and in a region which is close to the focus, the irradiation intensity being close to the appropriate processing value of the substrate or the irradiation intensity being greater than or equal to the appropriate processing value and less than or equal to an ablation threshold; and a second process of forming an uneven structure having the first modified portions as valleys by performing an etching treatment on the surface of the substrate having the periodic nanostructures formed thereon.
In the first process, by using linearly polarized laser light as the laser light, the valleys formed perpendicularly to a polarization direction of the laser may be formed as the periodic nanostructures.
In the first process, by using circularly polarized laser light as the laser light, the valleys having a form eddying in a rotation direction of the circularly polarized wave may be formed as the periodic nanostructures.
In the first process, by using circularly polarized laser light as the laser light, the valleys arranged obliquely to a laser scanning direction may be formed as the periodic nanostructures.
In the second process, by using an isotropic dry etching method as the etching treatment, a periodic uneven structure may be formed which has first valleys arranged periodically in a region which is close to the focus at which the laser light is concentrated and second fine valleys arranged periodically in bottom portions of the first valleys.
In the second process, by using an anisotropic dry etching method as the etching treatment, a region which is close to the focus at which the laser light is concentrated may be selectively etched to make the valley deeper, thereby forming periodic uneven structure.
In the second process, by using an anisotropic dry etching method as the etching treatment and by changing a process pressure at the time of etching, the form of the valleys may be controlled.
A base according to an aspect of the invention includes: an uneven structure which is formed using the surface nanostructure forming method in a part which is close to the surface of a substrate, and includes valleys arranged periodically.

### EFFECTS OF THE INVENTION

In a surface nanostructure forming method according to an aspect of the invention, in the first process, a part which is close to the surface of a substrate is irradiated with laser light at an irradiation intensity which is close to an appropriate processing value of the substrate, or greater than or equal to the appropriate processing value and less than or equal to an ablation threshold to form periodic nanostructures in which first modified portions and second modified portions are periodically arranged in a self-assembled manner in a region which is close to the focus at which the laser light is concentrated. Then, in a second process, an etching treatment is performed on the surface of the substrate having the periodic nanostructures formed thereon to form an uneven structure having the first modified portions as valleys.
Therefore, using a simpler method than hitherto, periodic nanostructures having a high aspect ratio can be formed.
In addition, by changing a parameter at the time of etching or the polarization of the laser light, the processing form can be controlled.
According to the aspects of the invention, it is possible to provide a surface nanostructure forming method in which the processing is simplified, the processing form can be controlled, and an uneven structure which includes valleys having a high aspect ratio can be formed.
In addition, a base according to an aspect of the invention has an uneven structure which includes valleys arranged periodically in a part which is close to the surface of a substrate.
Since the valley is formed by the surface nanostructure forming method of the invention, it has a high aspect ratio.
As a result, according to the aspects of the invention, it is possible to provide a base which has a surface nanostructure formed of periodic nanostructures having a high aspect ratio.

### BRIEF DESCRIPTION OF THE DRAWINGS

FIG. 1A is a cross-sectional view schematically showing a surface nanostructure forming method according to an embodiment of the invention.
FIG. 1B is a cross-sectional view schematically showing the surface nanostructure forming method according to the embodiment of the invention.
FIG. 2 is a plan view schematically showing an example of formation of periodic nanostructures.
FIG. 3 is a photograph showing an example of formation of periodic nanostructures.
FIG. 4 is a photograph showing an example of formation of periodic nanostructures.
FIG. 5 is a plan view schematically showing an example of formation of periodic nanostructures.
FIG. 6 is a photograph showing an example of formation of periodic nanostructures.
FIG. 7 is a cross-sectional view schematically showing an example of formation of periodic nanostructures formed of fins and valleys.
FIG. 8 is a cross-sectional view schematically showing an example of formation of periodic nanostructures formed of first valleys and second fine valleys and fins arranged periodically in bottom portions of the first valleys.
FIG. 9 is a cross-sectional view schematically showing an example of the configuration of a base of the invention.

### EMBODIMENTS FOR CARRYING OUT THE INVENTION

Hereinafter, a surface nanostructure forming method and a base according to an embodiment of the invention will be described.

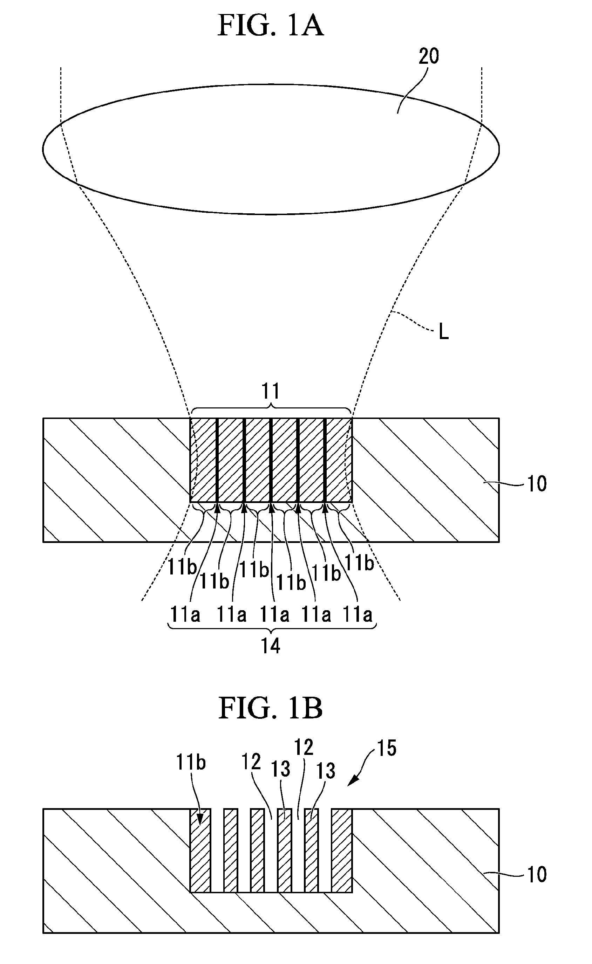

FIGS. 1A and 1B are cross-sectional views schematically showing a surface nanostructure forming method of this embodiment.
The surface nanostructure forming method of the invention includes a first process [see FIG. 1A] of irradiating a part which is close to the surface of a substrate 10 with laser light L at an irradiation intensity which is close to, or greater than or equal to an appropriate processing value of the substrate 10 to form periodic nanostructures 14 which is periodically arranged and forms valleys 12 by the next etching treatment in a self-assembled manner in a region which is close to the focus at which the laser light L is concentrated; and a second process [see FIG. 1B] of performing the etching treatment on the surface of the substrate 10 having the periodic nanostructures 14 formed thereon to erode a region forming the valley 12, thereby forming an uneven structure 15.

In the surface nanostructure forming method of this embodiment, in the first process, the part which is close to the surface of the substrate 10 is irradiated with laser light L at an irradiation intensity which is close to an appropriate processing value of the substrate 10, or greater than or equal to the appropriate processing value and less than or equal to an ablation threshold.
In this manner, the periodic nanostructures 14 [means "a structure formed of a plurality of first modified portions 11 a" in FIG. 1A"] which is periodically arranged and forms the valleys 12 by the next etching treatment is formed in a self- assembled manner in the region which is close to the focus at which the laser light L is concentrated.
Then, in the second process, the etching treatment is performed on the surface of the substrate 10 having the periodic nanostructures 14 formed thereon to form the uneven structure 15 including the valleys 12.
The valley 12 of the uneven structure 15 is obtained by selectively etching a first modified portion 11 a, corresponding to a part in which interference waves between the plasmon or electron plasma wave and the incident light are intensified by each other, than the other region (second modified portion 11b).
In addition, the processing form can be controlled by changing the polarization of the laser light L and the parameter at the time of etching.
Particularly, the form is more easily controlled by using a dry etching method in the etching.
Accordingly, in the surface nanostructure forming method of this embodiment, the processing form can be controlled, and the uneven structure 15 which has the valleys 12 having a high aspect ratio can be formed.
Hereinafter, the process will be described in order.

(1) As shown in FIG. 1A, a part which is close to the surface of the substrate 10 is irradiated with laser light L at an irradiation intensity which is close to an appropriate processing value of the substrate 10, or greater than or equal to the appropriate processing value and less than or equal to an ablation threshold to form the periodic nanostructures 14 in a self- assembled manner in a region which is close to the focus at which the laser light L is concentrated (first process).
The periodic nanostructures 14 is formed of the plurality of first modified portions 11 a [regions expressed by the thick straight lines in FIG. 1A], and between the first modified portions 11 a, a second modified portion 11 b [region expressed by the oblique lines in FIG. 1A] is formed.
The first modified portion 11 a is a part in which interference waves between the plasmon or electron plasma wave and the incident light are intensified by each other, is preferentially etched easily by the next etching treatment, and forms a valley 12 after etching.
The second modified portion 11 b is a part which is less influenced by the interference waves between the plasmon (electron plasma wave) and the incident light than the first modified portion 11a, and is not easily etched in the next etching treatment.
As a material of the substrate 10, it is preferable to use a material which is suitable for forming the periodic nanostructures 14 on the surface of the substrate 10 by the first process and has high transmittance with respect to the laser light L.
Synthetic silica having the highest processability and other materials, for example, glass materials such as borosilicate glass and crystalline materials such as silica, sapphire, diamond, and silicon monocrystal can be used.

At an irradiation intensity which is close to an appropriate processing value of the material of the substrate 10, or greater than or equal to the appropriate processing value and less than or equal to an ablation threshold, the laser light L is concentrated and applied to the surface of the substrate 10 or a part which is close to the surface, or the light concentration and application is scanned.
Accordingly, the periodic nanostructures 14 can be formed in a self- assembled manner in a region which is close to the focus at which the laser light L is concentrated.
Here, the appropriate processing value is defined as a minimum value of the laser pulse energy for forming the periodic nanostructures 14.
In addition, the ablation threshold is a minimum value of the laser pulse energy for causing ablation and is different from the appropriate processing value.
Generally, the appropriate processing value is a value which is smaller than the ablation threshold.

In addition, as the laser light L, it is preferable to use laser light having a pulse duration of picosecond order or shorter.
For example, a Ti-sapphire laser, a fiber laser having a pulse duration of picosecond order or shorter, and the like can be used.
As a lens 20 which concentrates the laser light L, for example, a refractive objective lens or a refractive lens can be used.
Moreover, for example, Fresnel, reflective, oil immersion, and water immersion objective lenses or lenses can be used for irradiation.
In addition, for example, when using a cylindrical lens, it is possible to perform laser irradiation over a wide range of the surface of the substrate 10 at one time.
In addition, for example, when using a holographic mask or interference, it is possible to process a wide region at one time.

The method of applying laser light L is not particularly limited.
For example, when irradiating the surface of the substrate 10 with laser light L while moving the laser light L in a direction parallel to the surface of the substrate 10, it is possible to form a periodic uneven structure over a wide range.
In addition, for example, when applying the laser light L so that irradiated portions superimpose each other in a direction parallel to the laser moving direction, an uneven structure is formed in a self-assembled manner due to the influence of another uneven structure.
Therefore, the periodic nanostructures 14 superimpose without deviation.

Specifically, for example, a Ti-sapphire laser is used.
As irradiation conditions, for example, the laser light L is concentrated and applied at a wavelength of 800 nm with a repetition frequency of 200 kHz and a laser scanning rate of 1 mm/sec.
The values of the wavelength, the repetition frequency, and the scanning rate are examples. The invention is not limited thereto and can be arbitrarily changed.
When the Ti-sapphire laser is applied to a silica substrate, it is preferable to use an objective lens having an N.A less than 0.7 as the lens 20 which is used for light concentration.
Regarding the pulse energy, it is preferable that in irradiating a part which is close to the surface, the part is irradiated with an energy which is equal to or less than an ablation threshold, for example, with an energy of approximately 100 nJ/pulse or less.

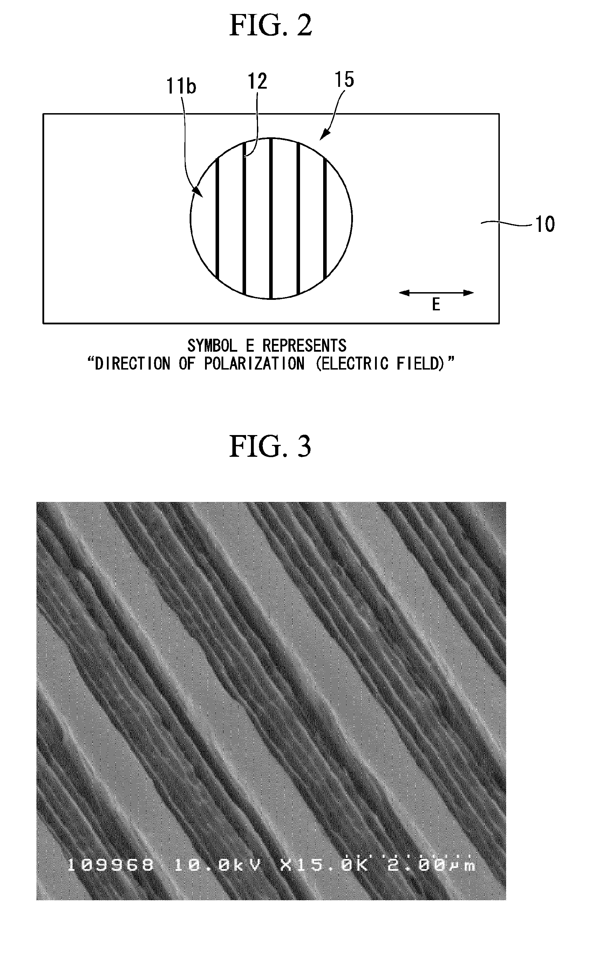

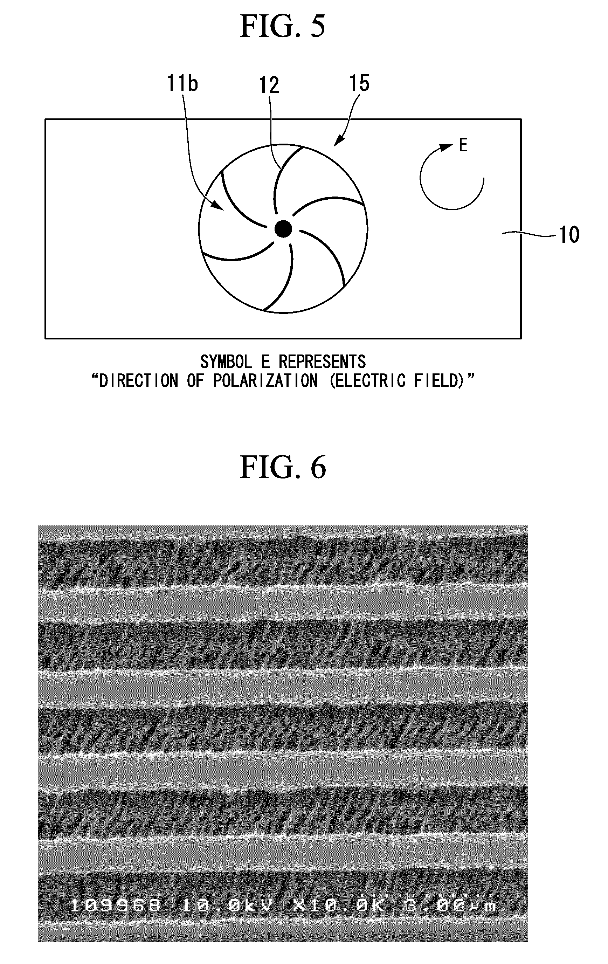

In addition, when the periodic nanostructures 14 are changed by controlling the polarization of the laser light L, the forming pattern of the valleys 12 forming the uneven structure 15 (which is obtained by an etching treatment to be described later) which reflects the changed periodic nanostructures can be changed.
Here, FIGS. 2 and 5 are plan views schematically showing an example of formation of the uneven structure 15.
In FIGS. 2 and 5, the propagation of the laser light L is applied perpendicularly to the surface of paper.
For example, when linearly polarized laser light is used as the laser light L, valleys 12 formed perpendicularly to the polarization (also referred to as an electric field, or an electric field vector) direction of the laser light L are formed as the uneven structure 15 which reflects the periodic nanostructures as shown in FIGS. 2 to 4.
FIG. 2 is a view when the laser light L is applied to one point.
FIG. 3 is a photograph when the polarization direction of the laser light L is perpendicular to the scanning direction.

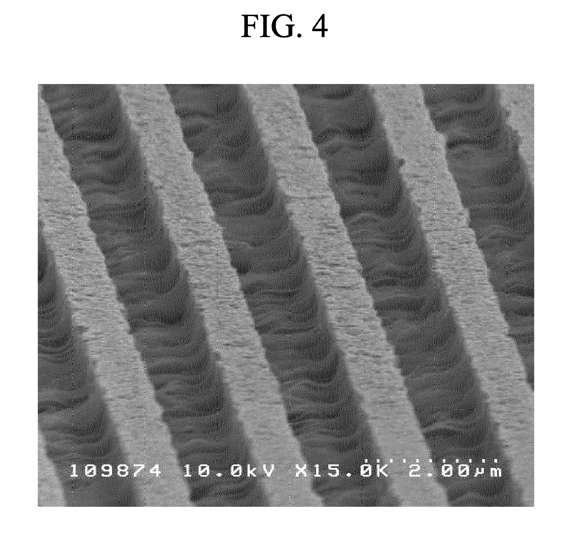

FIG. 4 is a photograph when the polarization direction of the laser light L is parallel to the scanning direction.

In addition, when circularly polarized laser light is used as the laser light L, in the case in which pulse processing scratches adjacent to each other do not superimpose each other, valleys 12 having a form eddying in a rotation direction of the circularly polarized wave are formed as the uneven structure 15 which reflects the periodic nanostructures as shown in FIG. 5.

In addition, when circularly polarized laser light is used as the laser light L, when pulse processing scratches adjacent to each other superimpose each other, valleys 12 having a form oblique to the laser scanning direction are formed as the uneven structure 15 which reflects the periodic nanostructures as shown in FIG. 6.
When laser irradiation is performed so that the circularly polarized wave is parallel to the surface of the substrate 10, a structure in which the uneven structure 15 is oblique can be formed.
However, when the scanning is performed using a circularly polarized wave in a direction parallel to the surface and a plurality of pulse processing scratches thus superimpose each other, the surface of the circularly polarized wave has a form different from the above-described form, but immediately below the surface, an eddying structure is obtained.
Here, the linearly polarized wave and the circularly polarized wave are described as polarized waves, but the same periodic uneven structure is formed even when the polarized wave is an elliptically polarized wave.

In addition, a sacrificial layer (not shown) may be formed on the surface of the substrate 10 in advance to suppress the ablation and to prevent the scattering of unnecessary ablation particles.
As a material of the sacrificial layer, it is preferable to use an inorganic material transparent with respect to the wavelength of laser. However, an organic material may also be used.
In this case, even when a part which is close to the surface of the material is irradiated with laser light, laser light having an energy which is equal to or greater than the ablation threshold can be applied.

(2) Next, as shown in FIG. 1B, an etching treatment is performed on the surface of the substrate 10 having the periodic nanostructures 14 formed thereon to erode the valleys 12 (second process).
The first modified portion 11 a, which is a region corresponding to a part in which interference waves between the plasmon (electron plasma wave) and the incident light are intensified by each other, is selectively etched in advance of the other region (second modified portion 11 b), the first modified portion 11a to be the periodic nanostructures 14 by etching.
In this manner, the valleys 12 are formed.
Accordingly, without performing polishing, it is possible to form the periodic nanostructures 14 which have the valleys 12 having a high aspect ratio on the surface of the substrate 10.

It is known that by concentrating and applying picosecond- or shorter-order pulsed laser light, interference occurs between the plasmon and the incident light in the light-concentrated portion, and the periodic nanostructures 14 perpendicular to the polarization of the laser is formed in a self-assembled manner.
The valley 12 of the uneven structure 15 which reflects the periodic nanostructures 14 are regarded as a region having low etching resistance.
For example, in the case of silica, regions with low oxygen concentration and regions with high oxygen concentration are periodically arranged, and the etching resistance of an low oxygen concentration portion (the above-described first modified portion 11 a) is weakened.
Therefore, when performing etching, the periodic valleys 12 and fins 13 are formed.
Thus, the valley 12 is a region which reflects the first modified portion 11 a, and the fin 13 is a region which reflects the second modified portion 11 b.
However, the etching resistance is determined in accordance with a combination of the substrate 10 and an etching liquid or an etching gas.
Therefore, in some cases, in accordance with a combination of both of them, the second modified portion 11b is selectively etched and forms a valley in advance of the first modified portion 11 a.

When performing wet etching, the etching is similar to a mode in which the isotropy due to dry etching is high.
When the concentration of a hydrofluoric acid is sufficiently low, a region having lower etching resistance is selectively etched.
However, since the processing is performed under the condition that the concentration is sufficiently low, the parameter property to change to various forms is low, and various forms which are seen by dry etching are not easily formed.
Furthermore, when forming a periodic uneven structure having a high aspect ratio, the periodic nanostructures may be broken due to the surface tension of the etchant.

On the other hand, when using a dry etching method, a structure having a high aspect ratio can be realized.
In addition, in this embodiment, since a dry etching method is used, there are many control parameters, and it is easy to control various processing forms.

By using an anisotropic dry etching method as the dry etching method, the part which is close to the focus at which the laser light L is concentrated is not entirely etched, but only the valleys 12 can be etched and eroded.
When the anisotropy of the dry etching is strong, a region having low etching resistance (the above-described first modified portion 11 a) is more easily etched and the etching has anisotropy, whereby the etching does not proceed in a horizontal direction.
Therefore, the materials of a modified portion 11 and a region which is close to the modified portion 11 are not etched, but only the region to be a valley 12 is etched to form a periodic uneven structure.

As the anisotropic dry etching method, for example, a method using reactive ion etching (hereinafter, RIE), such as parallel plate-type RIE, magnetron-type RIE, ICP-type RIE, and NLD-type RIE, can be used.
Other than RIE etching using a neutral beam can be used for example.

As a gas to be used a gas capable of chemically etching a material, such as fluorocarbon-based gases, SF-based gases, CHF3, a fluorine gas, and a chlorine gas, is mainly used, and appropriate other gases, oxygen, argon, helium, and the like can be mixed therewith and used for example.
Processing using other dry etching systems can also be performed.

Furthermore, in the anisotropic dry etching method, the structure of the valley 12 can be controlled by changing a process pressure (pressure in an etching chamber) at the time of etching.
The RF power at the time of etching and the pressure in the chamber are parameters by which the processing form is determined.
Particularly, the change in the etching pressure is a parameter by which the form (form of the uneven structure 15) after etching of the periodic nanostructures 14 is most easily controlled.

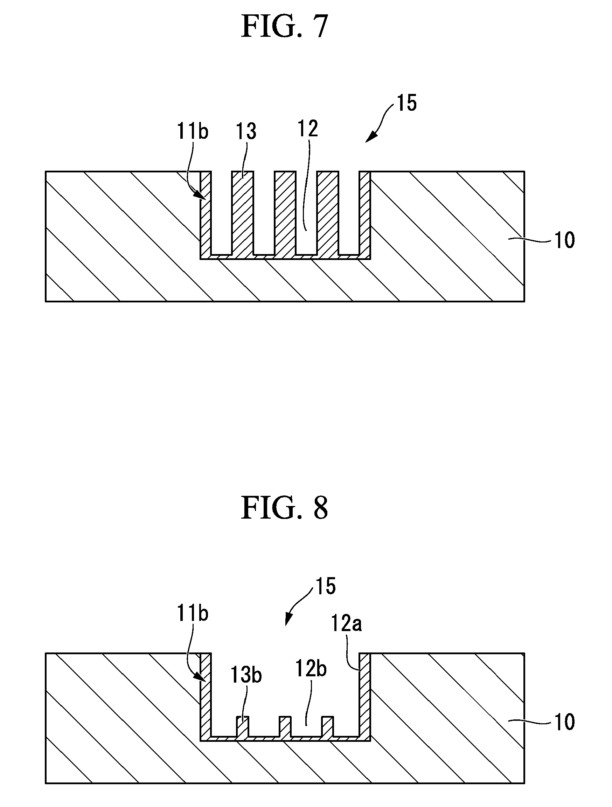

When the pressure is low, the draw of ions to the material is strong, and thus anisotropy increases, and only a region having high etching selectivity in the periodic uneven structure 15 can be selectively etched.
Therefore, the materials of the modified portion 11b which is positioned between the modified portions 11a forming the periodic nanostructures 14 and a part which is close to the modified portion 11b are almost not etched, and the modified portion 11a is selectively etched.
Accordingly, as shown in FIG. 7, an uneven structure 15 formed of fins 13 and valleys 12 is formed.

When the pressure is high, drawing of ions to the material is weakened, so that etching with higher isotropy is obtained.
Therefore, the modified portion 11 a which forms the periodic nanostructures 14 and is a region having high etching selectivity is etched also in a horizontal direction.
That is, together with the modified portion 11 a, the material of a part which is close to the modified portion 11 a (modified portion 11b) is also etched.
Accordingly, an uneven structure 15 formed of first valleys 12a, and second fine fins 13b and second fine valleys 12b arranged periodically in bottom portions of the first valleys 12a is formed as shown in FIG. 8.

In addition, in the dry etching, in order to increase the selectivity of the fin 13 and the valley 12, it is preferable to minimize the plasma density by, for example, reducing the RF power.
On the other hand, when the plasma density is increased by, for example, increasing the RF power, the selectivity of the fin 13 and the valley 12 tends to be reduced.

Additionally, by using an isotropic dry etching method as the dry etching method, the uneven structure 15 which has the first valleys 12a arranged periodically in a region which is close to the focus at which the laser light L is concentrated and the second fine valleys 12b arranged periodically in bottom portions of the first valleys 12a is formed.
When the isotropy of the dry etching is strong, a region having low etching resistance (modified portion 11 a) is more easily etched and the etching has isotropy, whereby the etching proceeds in a horizontal direction.
Therefore, the valley 12 and the fin 13 neighboring each other gradually from the upper part are connected to each other, and the materials of the modified portion 11 a and a part which is close to the modified portion 11 a are etched.
Accordingly, the uneven structure 15 formed of the first valleys 12a arranged periodically in a region which is close to the focus at which the laser light L is concentrated, and the second fine valleys 12b arranged periodically in bottom portions of the first valleys 12a is formed as shown in FIG. 8.

As the isotropic etching method, various dry etching systems such as barrel-type plasma etching, parallel plate-type plasma etching, and downflow-type chemical dry etching can be used.
In this manner, the uneven structure 15 formed of the valleys 12 arranged periodically in a part which is close to the surface of the substrate 10 can be formed.

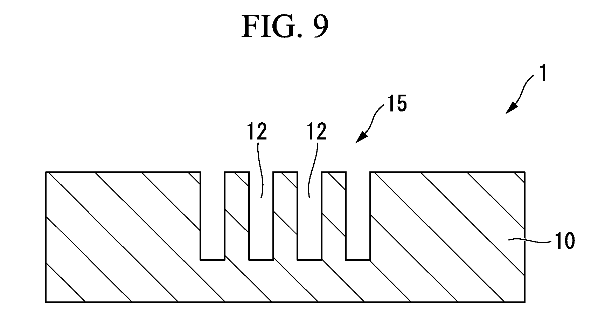

FIG. 9 is a cross-sectional view schematically showing an example of the configuration of a base 1 of this embodiment.
The base of this embodiment has an uneven structure 15 formed of valleys 12 periodically arranged in a part which is close to the surface of a substrate 10.
The base 1 of this embodiment has the uneven structure 15 formed of the valleys 12 periodically arranged in a part which is close to the surface of the substrate 10.
Since the valley 12 is formed using the above-described method of this embodiment, it has a high aspect ratio.
As a result, the base of this embodiment has a surface nanostructure formed of the uneven structure 15 having a high aspect ratio.
The base 1 which has a surface nanostructure formed of the uneven structure 15 having a high aspect ratio can be used in various devices.
As a specific application example, there is an optical element such as a diffraction grating.
Using the surface nanostructure of the invention, an uneven structure arranged at a cycle of approximately a light wavelength is realized, and a diffraction grating can be made.
As other application examples, there are a nano fluidic channel and a nano chamber for biological analysis and chemical synthesis, a substrate for cell orientation, and a template of nanoimprint.
Using the surface nanostructure forming method of the invention, such complicated forms can be easily formed without the use of a mask.

The surface nanostructure forming method and the base having a surface nanostructure of this embodiment have been described, but the invention is not limited thereto, and appropriately changed without departing from the gist of the invention.

### INDUSTRIAL APPLICABILITY

The invention can be widely applied to a surface nanostructure forming method and a base having a surface nanostructure.

### DESCRIPTION OF THE REFERENCE SYMBOLS

- 1:: BASE
- 10:: SUBSTRATE
- 11:: MODIFIED PORTION
- 11a:: FIRST MODIFIED PORTION
- 11b:: SECOND MODIFIED PORTION
- 12:: VALLEY
- 12a:: FIRST VALLEY
- 12b:: SECOND VALLEY
- 13:: FIN
- 13b:: SECOND FIN
- 14:: PERIODIC NANOSTRUCTURES
- 15:: UNEVEN STRUCTURE
- L:: LASER LIGHT

## Claims

1. A surface nanostructure forming method comprising:
preparing a substrate having an appropriate processing value;
a first process of irradiating a part which is close to a surface of the substrate with laser light having a pulse duration of picosecond order or shorter at an irradiation intensity, and forming a periodic nanostructures in which first modified portions and second modified portions are periodically arranged in a self-assembled manner at a focus at which the laser light is concentrated and in a region which is close to the focus, the irradiation intensity being close to the appropriate processing value of the substrate or the irradiation intensity being greater than or equal to the appropriate processing value and less than or equal to an ablation threshold; and
a second process of forming an uneven structure having the first modified portions as valleys by performing an etching treatment on the surface of the substrate having the periodic nanostructures formed thereon.

2. The surface nanostructure forming method according to Claim 1, wherein
in the first process, by using linearly polarized laser light as the laser light, the valleys formed perpendicularly to a polarization direction of the laser are formed as the periodic nanostructures.

3. The surface nanostructure forming method according to Claim 1, wherein
in the first process, by using circularly polarized laser light as the laser light, the valleys having a form eddying in a rotation direction of the circularly polarized wave are formed as the periodic nanostructures.

4. The surface nanostructure forming method according to Claim 1, wherein
in the first process, by using circularly polarized laser light as the laser light, the valleys arranged obliquely to a laser scanning direction are formed as the periodic nanostructures.

5. The surface nanostructure forming method according to any one of Claims 1 to 4, wherein
in the second process, by using an isotropic dry etching method as the etching treatment, a periodic uneven structure is formed which has first valleys arranged periodically in a region which is close to the focus at which the laser light is concentrated and second fine valleys arranged periodically in bottom portions of the first valleys.

6. The surface nanostructure forming method according to any one of Claims 1 to 4, wherein
in the second process, by using an anisotropic dry etching method as the etching treatment, a region which is close to the focus at which the laser light is concentrated is selectively etched to make the valley deeper, thereby forming a periodic uneven structure.

7. The surface nanostructure forming method according to any one of Claims 1 to 4, wherein
in the second process, by using an anisotropic dry etching method as the etching treatment and by changing a processing pressure at the time of etching, the form of the valleys is controlled.

8. A base comprising:
an uneven structure which is formed using the method according to any one of Claims 1 to 7 in a part which is close to the surface of a substrate, and is formed of valleys arranged periodically.
